Europäisches Patentamt

European Patent Office

Office européen des brevets

(11) Publication number: **0 186 383**

**B1**

(12) **EUROPEAN PATENT SPECIFICATION**

(45) Date of publication of patent specification: **08.03.89**

(51) Int. Cl.⁴: **G 01 N 17/00**

(21) Application number: **85309021.5**

(22) Date of filing: **11.12.85**

(54) Method of determining corrosion resistance.

(30) Priority: **11.12.84 US 680423**

(43) Date of publication of application:
**02.07.86 Bulletin 86/27**

(45) Publication of the grant of the patent:
**08.03.89 Bulletin 89/10**

(84) Designated Contracting States:
**BE FR GB IT SE**

(56) References cited:
**GB-A-2 132 345**

**CORROSION-NACE, vol. 30, no. 2, February 1974, pages 39-46; M. HENTHORNE "Corrosion testing of weldments"**

**ULMMANNS ENCYKLOPÄDIE DER TECHNISCHEN CHEMIE", vol. 24, 4th edition, pages 692-693, Verlag Chemie, Weinheim;**

**METAL PROGRESS, no. 2, July 1982, pages 31-37, Metals Park, Ohio, US; P.E. MANNING et al.: "The niche for laboratory corrosion testing"**

(73) Proprietor: **WESTINGHOUSE ELECTRIC CORPORATION**
**Westinghouse Building Gateway Center Pittsburgh Pennsylvania 15235 (US)**

(72) Inventor: **Parker, Donald William**
**104 Ripley Station Circle**
**Columbia South Carolina (US)**

Inventor: **Sabol, George Paul**
**37 Morris Street**
**Export Pennsylvania (US)**

Inventor: **Parker, Merle Alfred**
**7201 Stonehaven Drive**
**Columbia South Carolina (US)**

Inventor: **Lloyd, Isabel Knowlton**
**4890 Cole Road**
**Murrysville Pennsylvania (US)**

(74) Representative: **van Berlyn, Ronald Gilbert**
**23, Centre Heights**
**London, NW3 6JG (GB)**

Courier Press, Leamington Spa, England.

(56) References cited:

**WERKSTOFFE UND KORROSION, vol. 22, no. 10, 1971, pages 869-872; G. JANGG et al.: "Untersuchungen über das Korrosionsverhalten von Zirkoniumlegierungen"**

**N.T.I.S. TECH NOTES, May 1984, Virginia, US; A.K. SPRINGFIELD "Long-term corrosion of zirconium alloy"**

## Description

This invention relates to a method of determining corrosion resistance of zirconium and zirconium base alloys and, more particularly, with the corrosion testing of weldments thereof.

Zirconium alloys are commonly used in commercial pressurized water and boiling water nuclear reactors for structural elements such as fuel rod channels and grids, and as heat transfer elements such as tubular fuel cladding. One of the most common methods of joining one zirconium alloy member to another to form the aforementioned elements is by welding.

Zirconium and its alloys are well known to be highly reactive materials at high temperatures; that is, they readily, and rapidly, combine with oxygen and nitrogen in the atmosphere. It is known that the contamination of zirconium alloys with these elements can adversely affect the aqueous corrosion resistance and/or mechanical properties of the alloy. It is therefore common practice in the welding of zirconium alloy nuclear components to perform all welding in an inert atmosphere such as in a vacuum, or in a helium or argon atmosphere. For example, the girth welds joining Zircaloy-4 end plugs to the ends of Zircaloy-4 fuel cladding are typically formed by Tungsten Inert Gas (TIG) welding in a helium-filled chamber. To assure that air is not leaking into the welding chamber and contaminating the weldment, weldment samples are periodically subjected to a three-day 360°C (680°F) water corrosion test (ASTM Test No. G2).

While this test is very successful in detecting weldment samples having harmful impurity levels, especially nitrogen, it is time consuming. It takes three, to as long as seven days, to obtain test results. Due to this long turnaround time, the three-day water test is of little value as a process control test. Also, the storage space required for welded product awaiting acceptable test results is costly and increases inventory control problems. It is therefore desirable to develop a test which is as capable as the three-day water test in detecting weldments with deleterious impurity levels, but which is significantly more rapid.

Accordingly, the present invention resides in a method of determining corrosion resistance characterized by immersing a zirconium or zirconium alloy weldment including weld and heat affected zones into a fused salt bath maintained at a predetermined elevated temperature, controlling the temperature of said fused salt bath and the duration of said immersion to produce an essentially black oxide film in corrosion-resistant weld and heat affected zones while producing a scaling oxide scale in non-corrosion resistant weld and heat affected zones, removing said weldment from said salt bath, and evaluating the oxide produced by said immersion on said weld and heat-affected zones for the presence of said scaling oxide.

This method takes less than one hour while maintaining an accuracy commensurate with the commercial 360°C water test method now in use. Desirably, a zirconium or zirconium alloy weldment, which includes the weld and heat affected zones (HAZ), is immersing into a fused salt bath maintained at a temperature above 400°C.

Preferably, the fused salt bath is composed of a mixture of $NaNO_3$, $KNO_3$, and KI.

Preferably, the salt bath temperature and test duration are controlled to produce an adherent oxide weight gain in corrosion resistant Zircalloy-4 of from 6 to 16 mg/dm$^2$.

Preferably, the temperature of the bath is maintained at from 400°C (750°F) to 500°C (932°F) with a bath temperature of from 460°C (860°F) to 482°C (900°F) being more preferred. The duration of immersion is preferably from 2.5 to 16 minutes with a duration of from 5 to 10 minutes being most preferred.

Best results have been achieved when using a fused salt bath composed of:

about 48.6 w/o $NaNO_3$
about 41.0 w/o $KNO_3$
about 10.4 w/o KI

held at a temperature of from 460°C (860°F) to 482°C (900°F) with a Zircaloy-4 weldment immersion time of from 2.5 to 16 minutes, and more preferably, from 5 to 10 minutes. It is, however, our belief that the above parameters can be varied in accordance with the following guidelines while still achieving excellent results.

The controlling of the combination of time of immersion and temperature is believed to be critical. The time of immersion and the temperature of the bath should be controlled to produce an essentially black, adherent oxide film in corrosion resistant weldments while producing a scaling oxide corrosion product in contaminated, noncorrosion resistant weldments. The range of values of this time-temperature combination will vary in accordance with the particular salt bath used, and the oxidation kinetics of the particular metal or alloy (e.g., zirconium, Zircaloy-2, Zircaloy-4, zirconium 2.5 w/o niobium). For example, in Zircaloy-4 it is known that the conventional three-day water test produces an oxide weight gain in high quality Zircaloy-4 weldment samples of from 6 to 16 milligrams/square decimeter (mg/dm$^2$). It was therefore one of our goals when testing Zircaloy-4 weldments in accordance with our invention to select time-temperature combinations which will also produce weight gains of from 6—16 mg/dm$^2$ in non-contaminated Zircaloy-4 weldments.

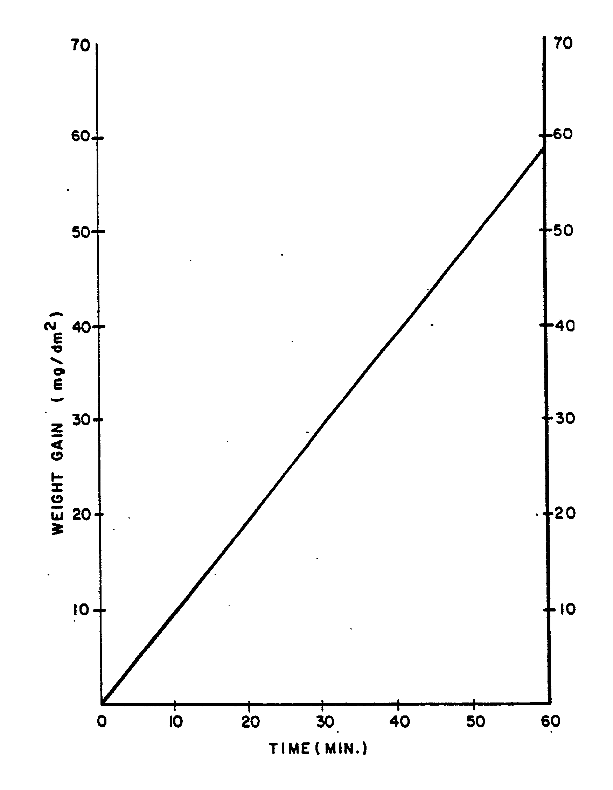

The Figure shows that for immersion in a 48.6 w/o $NaNO_3$—41.0 w/o $KNO_3$—10.4 w/o KI fused salt bath held at 460 to 482°C, the time necessary to produce the aforementioned weight gain is from 6 to 16 minutes. However, our tests have shown that immersion times as short as 2.5 minutes can still distinguish contaminated Zircaloy-4 weldments. While immersion times as short as 0.5 minute may still distinguish unacceptable from acceptable product, we prefer, in order to optimize the reproducibility of the test results, that the immersion time be held to from 2.5 to 16 minutes and, more preferably, from 5 to 10 minutes. At times longer than about 10 minutes spurious oxide scaling, unrelated to contamination, may occur with increasing frequency and interfere with the accurate evaluation of the test results.

Salt bath temperatures as low as 400°C and as high as about 500°C are also contemplated. The immersion time, however, is required to reproducibly distinguish contaminated material expected to vary with the bath temperature. For example, for bath temperatures around 400°C, the immersion time to produce a weight gain of 6 to 16 mg/dm² will be significantly longer than the about 5 to 16 minutes required at 460 to 482°C, while the immersion time to produce the same weight gain at about 500°C will be reduced.

While the composition of the salt bath is important to achieving the results described, it is not believed to be critical. It is therefore contemplated that other ratios of $NaNO_3$ to $KNO_3$ to $KI$ may be used, and that other substantially equivalent salt mixtures may also be substituted. While reagent grade $NaNO_3$, $KNO_3$ and $KI$ has been utilized in the following Examples, it is believed that commercial grades of these salts will produce similar results.

The invention will now be illustrated with reference to the following Examples:

Example I

Seventy-five (75) Zircaloy-4 test coupons were submitted for salt bath corrosion testing on eight different days over a three-week period. The fused salt bath utilized was a mixture of reagent grade salts producing the following mixture:

48.6 w/o $NaNO_3$
41.0 w/o $KNO_3$
10.4 w/o $KI$

The bath temperature was set at 460°C with an actual range of 460° to 482°C. Prior to immersion, all coupons were cleaned with isopropanol. The duration of immersion used was varied and included the following durations (in minutes):

2.5, 5, 7.5, 10, 12.5, 15, 20, 30, 45, 60.

Upon removal from the salt bath, the coupons were quenched in water and any adhering salt was rinsed off. The oxide weight gain of each coupon was then measured. The Figure shows the correlation between the oxide film weight gain of Zircaloy-4 test coupons and the duration of immersion in the fused salt bath. The results, shown graphically in the figure, indicate a straight line correlation passing through the origin with a slope of about 1. Least squares analysis of the data yield:

weight gain $(mg/dm^2) = [time\ (min.) \times 0.982] - 0.183$ (with $R^2 = 0.984$).

Test coupons submitted for three-day water autoclave tests showed weight gains of 6.1—16.1 mg/dm². The optimum salt bath test duration to match the weight gains observed in the conventional three-day water test is about 6 to about 16 minutes.

Example II

In order to demonstrate the ability to predict accurately three-day water corrosion test results, Zircaloy-4 end plugs (having a Zircaloy-4 weldment) were cut from rods that had been rejected due to slight atmosphere contamination as detected in the three-day water corrosion test. Fifty (50) end plugs were given the three-day water test in five separate autoclave runs. Results from these tests (see Table I) showed a 38% failure rate (i.e., scaling oxide in the weld and/or heat affected zones).

TABLE I
Three-day autoclave test

|  | Number tested | Number pass | Number fail | Percent failure |
|---|---|---|---|---|
| Day 1 | 10 | 7 | 3 | 30 |
| Day 2 | 10 | 5 | 5 | 50 |
| Day 3 | 10 | 8 | 2 | 20 |
| Day 4 | 10 | 5 | 5 | 50 |
| Day 5 | 10 | 6 | 4 | 40 |
| Total | 50 | 31 | 19 | 38 |

Seventy-five (75) end plugs were then tested using the salt bath technique described in Example I. Tests were conducted on eight different days and at six different test durations ranging from 2.5 to 15 minutes. After immersion, the samples were evaluated for the presence of white scaling oxide on the weld and/or heat affected zones of the weldment, as an indication of atmospheric contamination during welding. The overall failure rate was 40% (30/75). (See Tables II and III).

TABLE II
Rapid corrosion test

| Test duration | Number tested | Number pass | Number fail | Percent failure |
|---|---|---|---|---|
| 2.5 min | 20 | 13 | 7 | 35 |
| 5.0 min | 25 | 12 | 13 | 52 |
| 7.5 min | 9 | 5 | 4 | 44 |
| 10.0 min | 9 | 7 | 2 | 22 |
| 12.5 min | 4 | 3 | 1 | 25 |
| 15.0 min | 8 | 5 | 3 | 38 |
| Total | 75 | 45 | 30 | 40 |

# EP 0 186 383 B1

### TABLE III
### Rapid corrosion test

| Test day | Number tested | Number pass | Number fail | Percent failure |
|---|---|---|---|---|
| Day 1 | 5 | 4 | 1 | 20 |
| Day 2 | 10 | 6 | 4 | 40 |
| Day 3 | 10 | 7 | 3 | 30 |
| Day 4 | 10 | 5 | 5 | 50 |
| Day 5 | 10 | 6 | 4 | 40 |
| Day 6 | 10 | 6 | 4 | 40 |
| Day 7 | 10 | 7 | 3 | 30 |
| Day 8 | 10 | 4 | 6 | 60 |
| Total | 75 | 45 | 30 | 40 |

The test duration and test date had no apparent effect on the failure rate of samples submitted to the salt bath. Samples tested for 5—7.5 minutes were the easiest to examine visually. At test durations longer than 7.5 minutes, a spurious scale formation was seen on all plugs. This scale formation was attributed to base metal corrosion and not considered as a failure (i.e., it was not associated with the weld metal or heat affected zones).

Example III

To further examine the scale formation, several plugs were tested in the salt bath using the technique used in Examples I and II with one exception. Samples were removed every 30 seconds for visual examination only (no quenching). Failed plugs showed evidence of scale formation as early as 30 sec into the test.

In the preceding examples the fused salt bath temperature was controlled between about 460 and about 482°C, a range of about 22°C. It is believed that the test may be further improved by tighter control of the temperature during immersion. A temperature range of about 6°C is contemplated (e.g. about 460 to about 466°C).

While our invention has been described with respect to the detection of atmospheric contamination during welding, it is presently contemplated that those of ordinary skill in the art may also utilize this test to detect tungsten and/or uranium contamination as well, with any modification, which may be necessary, well within their skill after reading the foregoing specification.

## Claims

1. A method of determining corrosion resistance characterized by immersing a zirconium or zirconium alloy weldment including weld and heat affected zones into a fused salt bath maintained at a predetermined elevated temperature, controlling the temperature of said fused salt bath and the duration of said immersion to produce an essentially black oxide film in corrosion-resistant weld and heat affected zones while producing a scaling oxide scale in non-corrosion resistant weld and heat affected zones, removing said weldment from said salt bath, and evaluating the oxide produced by said immersion on said weld and heat-affected zones for the presence of said scaling oxide.

2. A method according to claim 1, characterized in that the temperature of the fused salt bath and the duration of the immersion are controlled to produce an oxide weight gain in corrosion resistant Zircaloy-4 of from 6 to 16 mg/dm$^2$.

3. A method according to claim 1 or 2, characterized in that the temperature of the fused salt bath is maintained at above 400°C.

4. A method according to claim 1, 2 or 3, characterized in that the temperature of the fused salt bath is maintained at from 400 to 500°C.

5. A method according to claim 4, characterized in that the temperature is from 460°C to 482°C.

6. A method according to claim 5, characterized in that the temperature is 460°C to 466°C.

7. A method according to any of claims 1 to 6, characterized in that the duration of the immersion is from 0.5 to 60 minutes.

6

8. A method according to claim 7, characterized in that the duration of the immersion is from 5 to 10 minutes.

9. A method according to any of claims 1 to 8, characterized in that the fused salt bath consists essentially of NaNO$_3$, KNO$_3$, and KI.

10. A method according to claim 9, characterized in that the fused salt bath consists essentially of about 48.6 w/o NaNO$_3$, about 41 w/o KNO$_3$, and about 10.4 w/o KI.

**Patentansprüche**

1. Verfahren zur Bestimmung der Korrosionsbeständigkeit, dadurch gekennzeichnet, daß man eine Zirkon- oder Zirkoniumlegierungs-Schweißung, die Schweiß- und Nachbarzonen aufweist, in ein Salzschmelzebad eintaucht, das bei einer vorbestimmten erhöhten Temperatur gehalten wird, die Temperatur des Salzschmelzebades sowie die Eintauchzeit so steuerut, daß in korrosionsbeständigen Schweiß- und Nachbarzonen ein schwarzer Film gebildet wird, während in nicht-korrosionsbeständigen Schweiß- und Nachbarzonen eine abblätternde Oxidschicht entsteht, daß man die Schweißung aus em Salzbad entfernt und das durch Eintauchen an den Schweiß- und Nachbarzonen gebildete Oxid auf Gegenwart des abblätternden Oxids untersucht.

2. Verfahren nach Anspruch 1, dadurch gekennzeichnet, daß man die Temperatur des Salzschmelzebades und die Dauer des Eintauchens so steuert, daß eine Gewichtszunahme durch Oxid in korrosionsbeständiger Zirkoniumlegierung-4 von 6 bis 16 mg/dm$^2$ erreicht wird.

3. Verfahren nach Anspruch 1 oder 2, dadurch gekennzeichnet, daß die Temperatur des Salzschmelzebades bei über 400°C gehalten wird.

4. Verfahren nach Anspruch 1, 2 oder 3, dadurch gekennzeichnet, daß die Temperatur des Salzschmelzebades bei 400 bis 500°C gehalten wird.

5. Verfahren nach Anspruch 4, dadurch gekennzeichnet, daß die Temperatur bei 460 bis 48°C gehalten wird.

6. Verfahren nach Anspruch 5, dadurch gekennzeichnet, daß die Temperatur 460° bis 466°C beträgt.

7. Verfahren nach einem der Ansprüche 1 bis 6, dadurch gekennzeichnet, daß die Eintauchzeit 0,5 bis 60 Minuten beträgt.

8. Verfahren nach Anspruch 7, dadurch gekennzeichnet, daß die Eintauchzeit 5 bis 10 Minuten beträgt.

9. Verfahren nach einem der Ansprüche 1 bis 8, dadurch gekennzeichnet, daß das Salzschmelzebad im wesentlichen aus NaNO$_3$, KNO$_3$ und KI besteht.

10. Verfahren nach Anspruch 9, dadurch gekennzeichnet, daß das Salzschmelzebad im wesentlichen aus etwa 48,6 w/o NaNO$_3$, etwa 41 w/o KNO$_3$ und etwa 10,4 w/o KI besteht.

**Revendications**

1. Procédé de détermination de la résistance à la corrosion, caractérisé en ce qu'il consiste à immerger un échantillon de soudure de Zirconium ou d'alliage de Zirconium comprenant la soudure et des zones affectées par la chaleur, dans un bain de sel fondu maintenu à une température élevée prédéterminée, à contrôler la température de ce bain de sel fondu et la durée de l'immersion pour produire un film d'oxyde essentiellement noir dans la soudure résistant à la corrosion et dans la zones affectées par la chaleur, tout en produisant une couche d'oxyde partant en écailles dans la soudure et les zones affectées par la chaleur ne résistant pas à la corrosion, à retirer l'échantillon du bain de sel, et à évaluer l'oxyde produit par l'immersion sur la soudure et sur les zones affectées par la chaleur, pour déterminer la présence de l'oxyde partant an écailles.

2. Procédé selon la revendication 1, caractérisé en ce que la température du bain de sel fondu et la durée de l'immersion sont contrôlées de manière à produire, dans du Zircaloy-4 résistant à la corrosion, une augmentation de poids d'oxyde comprise entre 6 et 16 mg/dm$^2$.

3. Procédé selon l'une quelconque des revendications 1 et 2, caractérisé en ce que la température du bain de sel fondu est maintenue au-dessus de 400°C.

4. Procédé selon l'une quelconque des revendications 1 à 3, caractérisé en ce que la température du bain de sel fondu est maintenue entre 400 et 500°C.

5. Procédé selon la revendication 4, caractérisé en ce que la température est comprise entre 460°C et 482°C.

6. Procédé selon la revendication 5, caractérisé en ce que la température est comprise entre 460°C et 466°C.

7. Procédé selon l'une quelconque des revendications 1 à 6, caractérisé en ce que la durée de l'immersion est comprise entre 0,5 et 60 minutes.

8. Procédé selon la revendication 7, caractérisé en ce que la durée de l'immersion est comprise entre 5 et 10 minutes.

9. Procédé selon l'une quelconque des revendications 1 à 8, caractérisé en ce que le bain de sel fondu est constitué essentiellement de NaNO$_3$, KNO$_3$, et KI.

10. Procédé selon la revendication 9, caractérisé en ce que le bain de sel fondu est constitué essentiellement d'environ 48,6% en poids de NaNO$_3$, environ 41% en poids de KNO$_3$, et environ 10,4% en poids de KI.